# EUROPÄISCHE PATENTSCHRIFT

(11) **EP 2 853 421 B1**
(45) Veröffentlichungstag und Bekanntmachung des Hinweises auf die Patenterteilung: **23.11.2016**
(21) Anmeldenummer: 14001402.8
(22) Anmeldetag: 16.04.2014
(51) Int. Cl.: B60D 5/00

(54) **Reparaturset zum Ersatz eines vom restlichen Balg abgetrennten verschlissenen Dachbereichs eines Balges**
Repair set for replacing a worn roof area of a bellows separated from the rest of the bellows
Kit de réparation destiné à remplacer une partie supérieure d'un soufflet usée, séparée du reste du soufflet

(30) Priorität: 26.09.2013 EP 13004677
(43) Veröffentlichungstag der Anmeldung: 01.04.2015
(73) Patentinhaber: Hübner GmbH & Co. KG, 34123 Kassel (DE)
(72) Erfinder: Volker, Jünke, 34123 Kassel (DE); Goebels, Andre, 34134 Kassel (DE)
(74) Vertreter: Patentanwälte Walther Hinz Bayer PartGmbB

(56) Entgegenhaltungen:
- EP-A1- 0 631 890
- EP-A1- 1 810 852
- DE-A1- 2 553 075
- DE-A1- 10 208 557
- DE-U1- 20 020 061

## Beschreibung

Die Erfindung betrifft ein Reparaturset zum Ersatz eines von einem Balg abgetrennten verschlissenen Dachbereichs, wobei der Balg eine Mehrzahl von hintereinander angeordneten Balgrahmen aufweist, wobei der Balg Bestandteil einer Übergangseinrichtung zwischen zwei gelenkig miteinander verbundenen Fahrzeugen ist.

Übergangseinrichtungen sind aus dem Stand der Technik bei Gelenkfahrzeugen hinreichend bekannt. Die Übergangseinrichtung bei einem Bus umfasst üblicherweise die Plattform und den die Plattform umspannenden Balg. Bei einem Schienenfahrzeug kann ebenfalls als Übergang eine Plattform oder eine Brücke, z. B. eine Gliederbrücke oder auch einzelne Brückenbleche vorgesehen sein, wobei die Übergangseinrichtung auch hier von dem Balg umspannt wird. In Bezug auf die Ausgestaltung des Balges sind zwei unterschiedliche Arten bekannt, nämlich zum einen Wellen- und zum anderen Faltenbälge. Beiden Balgarten ist jedoch gemein, dass diese mehrere hintereinander angeordnete, umlaufende Balgrahmen aufweisen. Bei einem Wellenbalg werden beispielsweise die Wellen im Wellengrund durch den Balgrahmen erfasst, wohingegen bei einem Faltenbalg eine Mehrzahl von Balgrahmen den Faltenbalgstoff erfassend im Übergang von einer Falte zur nächsten Falte zumindest auf der Außenseite des Balges vorgesehen sind.

Damit der Balg eine lange Lebensdauer aufweisen kann, ist aus der EP 1 810 852 A1 bekannt, den Boden des Balges auszutauschen. Der Balgboden weist zur lösbaren Aufnahme durch den übrigen Balg mehrere hintereinander angeordnete Schlaufen zur einschiebbaren Aufnahme von Leisten auf, wobei die Leisten im Übergang zum Balg mit den Balgrahmen lösbar verbindbar sind. Der Balgboden ist tuchartig ausgebildet und ist im Übergang zum Balg mit dem Balg durch einen Klettbandverschluss verbunden.

Wie bereits ausgeführt unterliegt der Balg einem natürlichen Verschleiß. Relevant ist in diesem Zusammenhang nicht nur der Verschleiß im Bereich des Bodens, sondern auch der Verschleiß im Bereich des Balgdaches. Dies insbesondere deshalb, weil dieser Teil des Balges zum einen einer intensiven Sonneneinstrahlung ausgesetzt ist, zum anderen allerdings auch, weil sich Verschmutzungen im Bereich der Wellen oder Falten ansammeln, die nicht immer vom Regen weggewaschen werden. Die Folge hiervon ist, dass der Balgstoff, der aus mindestens einem mit einem Elastomer beschichteten Festigkeitsträger, z. B. einem Gewebe oder Gewirk ausgebildet ist, an manchen Stellen schneller verschleißt, als an anderen Stellen. Die Balgrahmen selbst, die der Stabilität des Balges dienen, sind meistens noch vollkommen intakt. Bislang ist es nun so, dass wenn der Balg an einer bestimmten Stelle einen bestimmten Verschleißzustand aufweist, was meistens im Dachbereich der Fall ist, der Balg insgesamt ausgetauscht wird. Dies ist insbesondere dann mit einem erheblichen finanziellen Aufwand verbunden, wenn sogenannte Doppelwellenbälge bei Übergangseinrichtungen zum Einsatz kommen, wie dies beispielsweise bei Hochgeschwindigkeitszügen der Fall ist. In diesem Zusammenhang ist festzuhalten, dass bei einem Doppelwellenbalg der innere Balg im Wesentlichen überhaupt keinem Verschleiß unterliegt, da er während des Betriebes keinen Umwelteinflüssen ausgesetzt ist.

Die der Erfindung zugrunde liegende Aufgabe besteht nunmehr darin, bei einem Balg, der im Dachbereich verschlissen ist, unter Vermeidung des Austausches des kompletten Balges den Dachbereich wieder soweit instand zu setzen, dass das Fahrzeug mit einem solchen Balg noch gut 5 bis 10 Jahre in Betrieb bleiben kann, ohne dass die Gefahr von Undichtigkeiten im Balg besteht.

Zur Lösung der Aufgabe wird ein Reparaturset zum Ersatz eines von einem Balg abgetrennten verschlissenen Dachbereichs vorgeschlagen, wobei der Balg eine Mehrzahl von hintereinander angeordneten Balgrahmen aufweist, wobei der Balg Bestandteil einer Übergangseinrichtung zwischen zwei gelenkig miteinander verbundenen Fahrzeugen ist, wobei das Reparaturset einen Balgdachabschnitt umfasst, wobei der Balgdachabschnitt eine Mehrzahl von U-förmig umlaufenden Balgdachrahmen aufweist, wobei das Reparaturset weiterhin Verbindungselemente zur Verbindung des Restbalges mit den U-förmig umlaufenden Balgdachrahmen des Balgdachabschnittes umfasst, wobei der Balgdachabschnitt stirnseitig umlaufend zu beiden Seiten einen Anschraubrahmenabschnitt aufweist, durch den der Balgdachabschnitt an dem Wagenkasten des Fahrzeugs fixiert wird. Die Erfindung geht hierbei von dem Gedanken aus, dass der verschlissene Balgdachabschnitt vom übrigen Balg abgetrennt wird, und durch einen neuen Balgdachabschnitt ersetzt wird. Zum Abtrennen des verschlissenen Balgdachabschnittes werden zumindest die Balgrahmen an der erforderlichen Stelle durchtrennt, ebenso wie die mit einem Elastomer beschichteten Stoffbahnen, aus denen die Falten bzw. Wellen hergestellt sind, die durch die Balgrahmen verbunden sind. Zur Fixierung des neuen Balgdachabschnittes an dem Restbalg sind Verbindungselemente vorgesehen, die insbesondere die Balgdachrahmen des Balgdachabschnittes mit den Balgrahmen des Restbalges verbinden.

Der Balgdachabschnitt weist in der Ansicht U-förmig umlaufende Balgdachrahmen auf, d. h., dass auch der Balgdachabschnitt in der Frontansicht im Wesentlichen U-förmig ausgebildet ist, mit einem den Steg bildenden Dachabschnitt, und jeweils einem zu beiden Seiten angeordneten Balgschenkel. Hieraus wird deutlich, dass das Abtrennen des Balgdachabschnitts im Bereich des oberen Endes der Balgseitenwände erfolgt, was den Vorteil hat, dass hierdurch Probleme hinsichtlich der Dichtigkeit vermieden werden können, die auftreten würden, wenn der Balgdachabschnitt im Bereich des Steges also im horizontalen Teil des Balgdachabschnittes von dem restlichen Balg abgetrennt werden würde und dort auch der neue Balgdachabschnitt angesetzt würde.

Weitere Merkmale und Ausgestaltungen der Erfindung ergeben sich aus den Unteransprüchen.

Die Verbindungselemente sind jeweils als Übersetzprofile ausgebildet, die die Balgrahmen sowohl des Restbalges als auch die Balgdachrahmen des neuen Balgdachabschnittes erfassen.

Die Balgrahmen, also sowohl die Balgdachrahmen des neuen Balgdachabschnittes als auch die Balgrahmen des Restbalges sind im Querschnitt U-förmig und im Wesentlichen gleich ausgebildet. Das jeweilige Übersetzprofil zur Verbindung der Balgrahmen des Restbalges mit den Balgdachrahmen des neuen Balgdachabschnittes sind in Bezug auf ihren Querschnitt derart ausgebildet, dass das jeweilige Übersetzprofil auf den entsprechenden Rahmen aufgesetzt werden kann. Das Übersetzprofil ist auf den Rahmen fixierbar, beispielsweise durch Schrauben oder durch Nieten.

Der U-förmige Balgdachabschnitt weist an zumindest einer Stirnseite an zumindest einem Schenkel ein Zentrierglied auf. Das Zentrierglied kann hierbei als Dorn ausgebildet sein. Darüber hinaus weist der Balgdachabschnitt stirnseitig umlaufend zu beiden Seiten einen Anschraubrahmenabschnitt auf, der das Zentrierglied aufnimmt. Das Zentrierglied und hier insbesondere der Dorn sind vorteilhaft derart an dem Anschraubrahmen befestigt, dass der Dorn in die Querschnittsfläche des Anschraubrahmens des Restbalges hineinragt, und insofern der Dorn mit dem Anschraubrahmen des Restbalges für die Zentrierung sorgt. Vorteilhaft weist hierbei der neue Balgdachabschnitt an allen vier Ecken entsprechende Zentrierglieder und hier insbesondere Dorne auf, die in die entsprechenden Anschraubrahmen des Restbalges von oben, d. h. in die Querschnittsfläche des Anschraubrahmens eingeführt werden. Vorteilhaft verläuft hierbei der Dorn als Zentrierglied in etwa parallel zu den Verbindungselementen, durch die die Balgdachrahmen des neuen Balgdachabschnittes mit dem Balgrahmen des Restbalges verbunden werden.

Um die Verbindungsstelle zwischen dem neuen Balgdachabschnitt und dem Restbalg abdichten zu können, ist vorteilhaft vorgesehen, dass die die Wellen oder Falten bildenden Stoffbahnen des neuen Balgdachabschnittes seitlich überstehende Schürzenabschnitte aufweisen, die mit dem Restbalg ebenfalls im Bereich seiner Wellen oder Falten verbindbar sind, beispielsweise durch einen Klettbandverschluss. Hieraus wird deutlich, dass die die Wellen oder Falten bildenden Stoffstreifen des neuen Balgdachabschnittes mit den entsprechenden Stoffstreifen des restlichen Balges durch die Schürzenabschnitte überlappend verbunden sind, so dass die Gefahr des Eindringens vom Wasser weitgehend vermieden ist.

Gegenstand der Erfindung ist nicht nur ein Reparaturset der eingangs genannten Art, sondern darüber hinaus auch ein Verfahren zur Wiederherstellung eines im Dachbereich verschlissenen Balges einer Übergangseinrichtung zwischen zwei gelenkig miteinander verbundener Fahrzeuge, insbesondere mit einem Reparaturset, wie es zuvor beschrieben worden ist. Das Verfahren umfasst vorteilhaft zumindest die folgenden Arbeitsschritte:
- Heraustrennen des verschlissenen Balgdachabschnittes aus dem Balg;
- Einsetzen eines der Form des herausgetrennten Balgdachabschnittes entsprechenden neuen Balgdachabschnitts;
- Verbinden des neuen Balgdachabschnittes mit dem restlichen Balg durch
   = Verbinden der Balgdachrahmen mit den Balgrahmen des Restbalges,
   = Verbinden von an dem Balgdachabschnitt angeordneten Schürzenabschnitten mit den Wellen oder Falten des Restbalges;
- Verbinden der stirnseitig am Balgdachabschnitt angeordneten Anschraubrahmenabschnitte mit dem jeweiligen Fahrzeug.

Anhand der Zeichnungen wird die Erfindung nachstehend beispielhaft näher erläutert.
- Fig. 1: zeigt schematisch einen Balg in einer Vorderansicht, wobei der Balgdachabschnitt auf den Restbalg aufgesetzt wird;
- Fig. 2: zeigt die Einzelheit X aus Fig. 1;
- Fig. 3: zeigt den Balgdachabschnitt in einer perspektivischen Darstellung;
- Fig. 4: zeigt den Balgdachabschnitt in einer Vorderansicht;
- Fig. 4a: zeigt die Einzelheit Z aus Fig. 4;
- Fig. 5: zeigt einen Schnitt gemäß der Linie V-V aus Fig. 4a;
- Fig. 6: zeigt die Einzelheit Y aus Fig. 4 in vergrößerter Darstellung;
- Fig. 7: zeigt den Schnitt VII-VII aus Fig. 6.

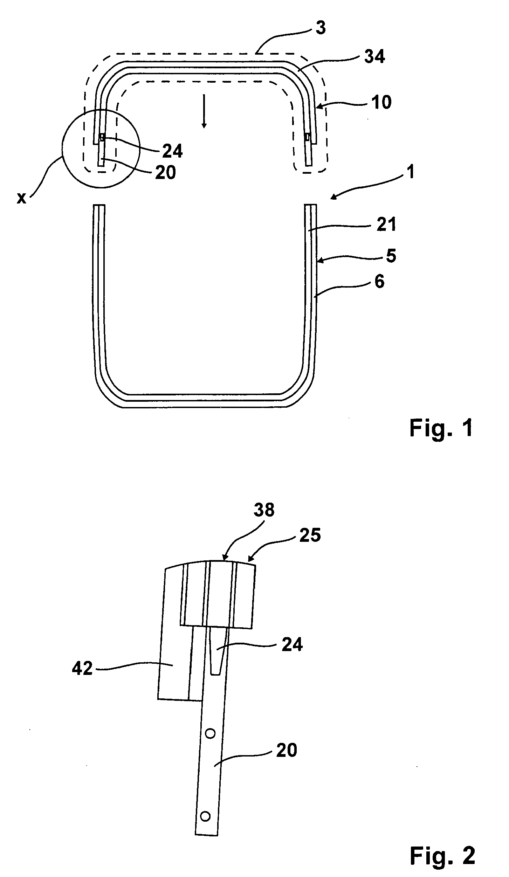

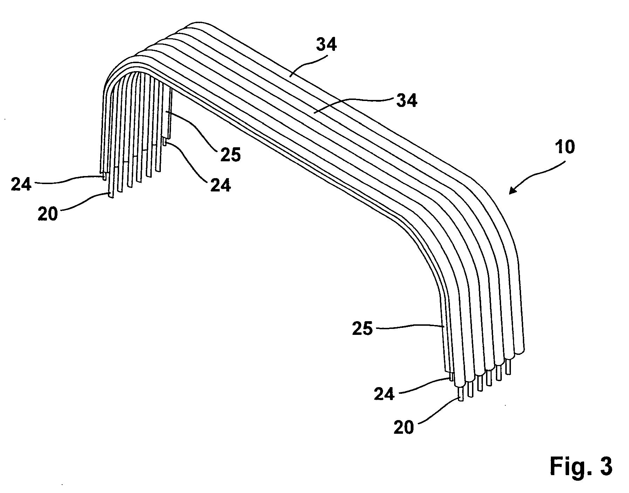

Die schematische Darstellung gemäß Fig. 1 zeigt einen Balg in der Vorderansicht, wobei der Balg das Bezugszeichen 1 trägt. In dem in Fig. 1 gestrichelten Bereich 3 ist der verschlissene Balgdachabschnitt abgetrennt worden, und durch einen neuen Balgdachabschnitt 10 ersetzt worden. Die Einzelheiten in Bezug auf die Ausgestaltung des neuen Balgdachabschnittes und auch die Form der Verbindung zwischen dem neuen Balgdachabschnitt 10 und dem Restbalg 5 ergibt sich aus den Figuren 2 bis 7, auf die im Folgenden eingegangen wird.

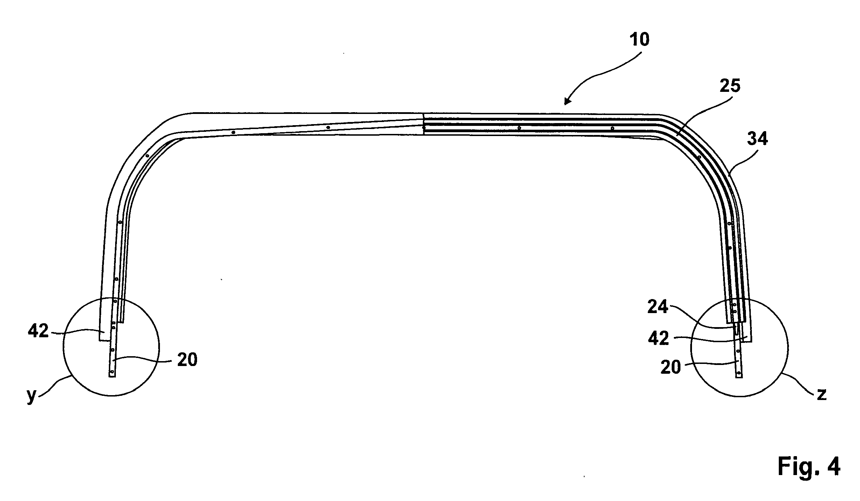

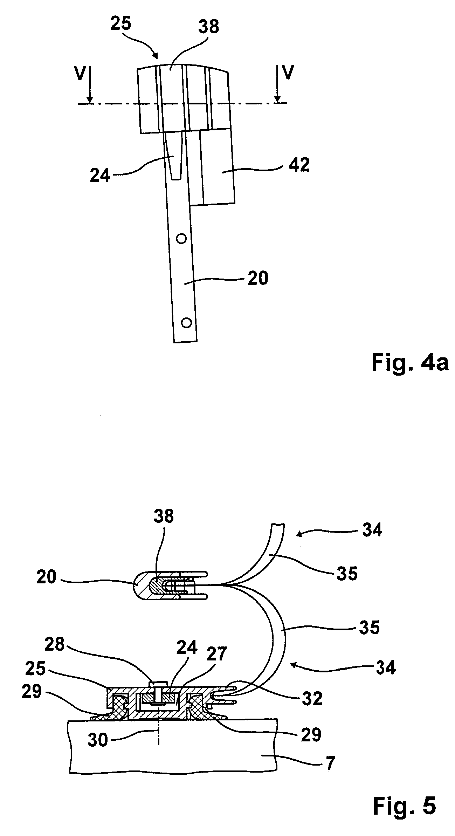

Die Fig. 2 zeigt hierbei die Einzelheit X aus Fig. 1 in vergrößerter Darstellung. Erkennbar ist hierbei zunächst das Übersetzprofil 20, das den Balgdachrahmen 38 (verdeckt dargestellt) des Balgdachabschnittes 10 erfasst. Parallel zu dem Übersetzprofil 20 verläuft der Dorn 24, der an dem mit 25 bezeichneten Anschraubrahmenabschnitt angeordnet ist. Der Anschraubrahmenabschnitt dient der Verbindung zu dem Wagenkasten. Zu den Einzelheiten wird auf die Fig. 5 verwiesen, die einen Schnitt gemäß der Linie V-V aus Fig. 4a zeigt. Erkennbar ist dort zunächst der Anschraubrahmenabschnitt 25, wobei der Anschraubrahmenabschnitt 25 eine Hohlkammer 27 zeigt, in der der Dorn 24 durch die Nieten 28 befestigt, angeordnet ist. Der Anschraubrahmen 25 weist Dichtlippen 29 auf, mit denen der Anschraubrahmenabschnitt 25 an dem Wagenkasten 7 anliegt. Die Fixierung des Anschraubrahmens 25 an dem Wagenkasten 7 erfolgt durch die angedeuteten Schrauben 30 in der Hohlkammer 27. Im Bereich der Schrauben 30 besitzt der Anschraubrahmen eine fensterartige Öffnung (nicht dargestellt), um Zugang zu den Schrauben 30 zu erhalten.

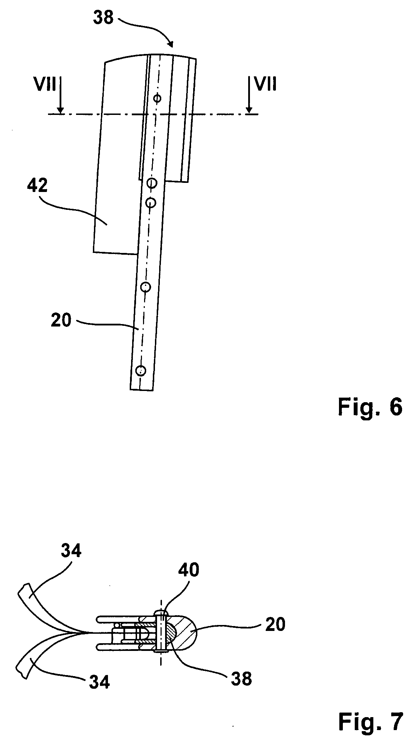

Wie sich aus der Darstellung gemäß Fig. 5 weiterhin ergibt, besitzt der Anschraubrahmen auf einer Seite eine maulartige Öffnung 32 zur klemmbaren Erfassung der die Welle 34 bildenden Stoffbahn 35. Im Übergang von dieser einen Welle 34 zur benachbarten Welle 34 weist der Balgdachabschnitt einen Balgdachrahmen 38 auf, der die Enden der beiden Stoffbahnen 35 klemmend erfasst, wie dies an sich bekannt ist. Erkennbar sitzt auf dem Balgrahmen 38 des Balgdachsabschnittes das Übersetzprofil 20 auf, das der Verbindung des Balgdachrahmens 38 des Balgdachabschnittes mit dem Balgrahmen 21 des Restbalges 5 dient. Aus Fig. 7 ist erkennbar, dass die Verbindung zwischen dem Übersetzprofil 20 und dem jeweiligen Balgdachrahmen 38 durch Nieten 40 erfolgt. In gleicher Weise erfolgt die Verbindung zwischen dem Übersetzprofil 20 und den Balgrahmen 21 des Restbalges 5 mit den Wellen 6.

Betrachtet man nunmehr z. B. die Fig. 4, so erkennt man, dass im Bereich des Dornes die Wellen 34 des Balgdachabschnittes einen Schürzenabschnitt 42 aufweisen, der als die jeweilige Welle 6 des restlichen Balges 5 überlappendes Element mittels eines Klettbandes (nicht dargestellt) mit der jeweiligen Welle 6 des Restbalges 5 verbunden ist.

### Bezugszeichenliste:

- 1: Balg
- 3: gestrichelter Bereich
- 5: Restbalg
- 6: Welle des Restbalges
- 7: Wagenkasten
- 10: Balgdachabschnitt
- 20: Übersetzprofil
- 21: Balgrahmen des Restbalges
- 24: Dorn
- 25: Anschraubrahmenabschnitt
- 27: Hohlkammer
- 28: Niet
- 29: Dichtlippe
- 30: Schraube
- 32: maulartige Öffnung
- 34: Welle des Balgdachabschnitts
- 35: Stoffbahn
- 38: Balgdachrahmen
- 40: Niet
- 42: Schürzenabschnitt zur Verbindung mit der Welle des Restbalges

## Patentansprüche

1. Reparaturset zum Ersatz eines von einem Balg (1) abgetrennten verschlissenen Dachbereichs, wobei der Balg (5) eine Mehrzahl von hintereinander angeordneten Balgrahmen aufweist, wobei der Balg Bestandteil einer Übergangseinrichtung zwischen zwei gelenkig miteinander verbundener Fahrzeuge ist, wobei das Reparaturset einen Balgdachabschnitt (10) umfasst, wobei der Balgdachabschnitt (10) eine Mehrzahl von U-förmig umlaufenden Balgdachrahmen (38) aufweist, wobei das Reparaturset weiterhin Verbindungselemente zur Verbindung der Balgrahmen (21) des Restbalges (5) mit den U-förmig umlaufenden Balgdachrahmen (38) des Balgdachabschnittes (10) umfasst, wobei der Balgdachabschnitt (10) stirnseitig umlaufend zu beiden Seiten einen Anschraubrahmenabschnitt (25) aufweist.

2. Reparaturset nach Anspruch 1,
**dadurch gekennzeichnet,**
**dass** die Verbindungselemente jeweils als Übersetzprofile (20) ausgebildet sind, die die Balgrahmen (21) sowohl des Restbalges (5) als auch die Balgdachrahmen (38) des Balgdachabschnittes (10) erfassen.

3. Reparaturset nach Anspruch 2
**dadurch gekennzeichnet,**
**dass** die Balgrahmen (21) und die Balgdachrahmen (38) im Querschnitt U-förmig ausgebildet sind, wobei das jeweilige Übersetzprofil (20) im Querschnitt derart U-förmig ausgebildet ist, dass es auf den jeweiligen Balgrahmen (21) oder Balgdachrahmen (38) aufsetzbar ist.

4. Reparaturset nach Anspruch 2 oder 3,
**dadurch gekennzeichnet,**
**dass** das jeweilige Übersetzprofil (20) auf dem Balgrahmen (21) und dem Balgdachrahmen (38) fixierbar ist.

5. Reparaturset nach Anspruch 4,
**dadurch gekennzeichnet,**
**dass** die Übersetzprofile (20) auf den Balgrahmen (21) und Balgdachrahmen (38) durch Schrauben oder Nieten (40) fixierbar sind.

6. Reparaturset nach einem der voranstehenden Ansprüche,
**dadurch gekennzeichnet,**
**dass** der U-förmige Balgdachabschnitt (10) an zumindest einer Stirnseite an zumindest einem Schenkel ein Zentrierglied aufweist.

7. Reparaturset nach Anspruch 6,
**dadurch gekennzeichnet,**
**dass** das Zentrierglied als Dorn (24) ausgebildet ist.

8. Reparaturset nach Anspruch 7,
**dadurch gekennzeichnet,**
**dass** der Dorn (24) etwa parallel zu den Verbindungselementen ausgerichtet ist.

9. Reparaturset nach einem der voranstehenden Ansprüche,
**dadurch gekennzeichnet,**
**dass** der Anschraubrahmenabschnitt (25) das Zentrierglied aufnimmt.

10. Reparaturset nach einem der voranstehenden Ansprüche,
**dadurch gekennzeichnet,**
**dass** der in der Ansicht U-förmige Balgdachabschnitt (10) im Übergang zu dem Restbalg (5) Schürzenabschnitte (42) aufweist, die mit den Wellen (6) oder Falten des Restbalges (5) verbindbar sind.

11. Verfahren zur Wiederherstellung eines im Dachbereich verschlissenen Balges einer Übergangseinrichtung zwischen zwei gelenkig miteinander verbundenen Fahrzeugen, insbesondere mit einem Reparaturset gemäß einem oder mehrerer der Ansprüche 1 bis 10, umfassend folgender Arbeitsschritte:
- Heraustrennen des verschlissenen Balgdachabschnittes aus dem Balg;
- Einsetzen eines der Form des herausgetrennten Balgdachabschnittes entsprechenden neuen Balgdachabschnitts (10);
- Verbinden des neuen Balgdachabschnittes (10) mit dem Restbalg (5) durch
= Verbinden der Balgdachrahmen (38) mit den Balgrahmen (21) des Restbalges (5),
= Verbinden von an dem Balgdachabschnitt (10) angeordneten Schürzenabschnitten (42) mit den Falten oder Wellen (6) des Restbalges (5);
- Verbinden der stirnseitig am Balgdachabschnitt (10) angeordneten Anschraubrahmenabschnitte (25) mit dem jeweiligen Fahrzeug.

## Claims

1. Repair set for replacing a worn roof area of a bellows separated from the bellows (1), wherein the bellows comprises a plurality of successively arranged bellows frames, wherein the bellows part is part of a gangway device between two articulately connected vehicles, wherein the repair set comprises a bellows roof section (10), wherein the bellows roof section (10) comprises a plurality of circumferentially U-shaped bellows roof frames (38), wherein the repair set further includes connection elements for connecting the bellows frames (21) of the rest of the bellows (5) with the circumferentially U-shaped bellows roof frames (38) of the bellows roof section (10), wherein the bellows roof section (10) comprises a screw-on frame part (25) surrounding it circumferentially on both sides on its front side.

2. Repair set according to claim 1,
**characterized in that**,
the connecting elements are respectively formed as transition profiles (20), which hold the bellows frames (21) of the rest of the bellows (5) as well as the bellows roof frames (38) of the bellows roof section (10).

3. Repair set according to claim 2,
**characterized in that**,
the bellows frames (21) and the bellows roof frames (38) is formed with a U-shaped cross section, wherein the cross section of the respective transition profile (20) is formed with a U-shape in such a manner, that it can be fitted onto the bellows frames (21) or onto the bellows roof frames (38) respectively.

4. Repair set according to claim 2 or 3,
**characterized in that**,
the respective transition profile (20) is fixable to the bellows frame (21) and the bellows roof frame (38).

5. Repair set according to claim 4,
**characterized in that**,
the transition profiles (20) are fixable to the bellows frame (21) and the bellows roof frame (38) by screwing or riveting.

6. Repair set according to one of the afore-mentioned claims, **characterized in that**,
the U-shaped bellows roof section (10) has a centring element on at least one front face, on at least one leg.

7. Repair set according to claim 6,
**characterized in that**,
the centring element is formed as a mandrel (24).

8. Repair set according to claim 7,
**characterized in that**,
the mandrel (24) is oriented roughly parallel to the connecting elements.

9. Repair set according to one of the afore-mentioned claims,
**characterized in that**,
the screw-on frame part (25) receives the centring element.

10. Repair set according to one of the afore-mentioned claims,
**characterized in that**,
the bellows roof section (10), which has a U-shaped appearance, comprises apron sections (42) in the transition to the rest of the bellows (5), which can be connected with the corrugations (6) or folds of the rest of the bellows (5).

11. Process to restore a worn bellows in the roof area of a gangway device between two articulately connected vehicles, in particular with a repair set according to one or more of claims 1 to 10, comprising the steps of:
- detaching the worn bellows roof section from the bellows;
- installing a new bellows roof section (10) that has the same shape as the removed bellows roof area;
- connecting the new bellows roof section (10) to the rest of the bellows (5) by
= connecting the bellows roof frames (38) to the bellows frames (21) of the rest of the bellows (5),
= connecting apron parts (42) arranged at the bellows roof section (10) with the folds and corrugations (6) of the rest of the bellows (5);
- connecting the screw-on frame parts (25) arranged on the front side of the bellows roof section (10) with the respective vehicle.

## Revendications

1. Kit de réparation pour remplacer une zone de toit d'un soufflet usée, séparée du soufflet (1), où le soufflet comporte une pluralité de cadres de soufflet disposés les uns à la suite des autres, où le soufflet fait partie d'un dispositif d'intercommunication entre deux véhicules reliés l'un à l'autre de manière articulée, où le kit de réparation comprend une partie de toit de soufflet (10), où la partie de toit de soufflet (10) comporte une pluralité de cadres de toit de soufflet (38) périphériques en forme de U, où le kit de réparation comprend en outre des éléments de liaison pour relier les cadres de soufflet (21) du reste du soufflet (5) avec les cadres de toit de soufflet (38) périphériques en forme de U de la partie de toit de soufflet (10), où la partie de toit de soufflet (10) comporte sur la face avant, de chaque côté une partie de cadre à visser (25) périphérique.

2. Kit de réparation selon la revendication 1,
**caractérisé en ce que**,
les éléments de liaison sont respectivement conçus comme profils de transition (20), lesquels saisissent les cadres de soufflet (21) du reste du soufflet (5), ainsi que les cadres de toit de soufflet (38) de la partie de toit de soufflet (10).

3. Kit de réparation selon la revendication 2
**caractérisé en ce que**,
les cadres de soufflet (21) et les cadres de toit de soufflet (38) ont une coupe transversale en forme de U, où le profil de transition (20) respectif a une coupe transversale en forme de U telle qu'il peut être placé sur le cadre de soufflet (21) ou sur le cadre de toit de soufflet (38) respectif.

4. Kit de réparation selon la revendication 2 ou 3,
**caractérisé en ce que**,
le profil de transition (20) respectif peut être fixé sur le cadre de soufflet (21) et sur le cadre de toit de soufflet (38).

5. Kit de réparation selon la revendication 4,
**caractérisé en ce que**,
les profils de transition (20) peuvent être fixés sur le cadre de soufflet (21) et sur le cadre de toit de soufflet (38) à l'aide de vis ou de rivets (40).

6. Kit de réparation selon l'une des revendications précédentes,
**caractérisé en ce que**,
la partie de toit de soufflet (10) en forme de U comporte un élément de centrage sur au moins une face avant sur au moins une branche.

7. Kit de réparation selon la revendication 6,
**caractérisé en ce que**,
l'élément de centrage se présence sous la forme d'un mandrin (24).

8. Kit de réparation selon la revendication 7,
**caractérisé en ce que**,
le mandrin (24) est orienté de manière approximativement parallèle aux éléments de liaison.

9. Kit de réparation selon l'une des revendications précédentes,
**caractérisé en ce que**,
la partie de cadre à visser (25) reçoit l'élément de centrage.

10. Kit de réparation selon l'une des revendications précédentes,
**caractérisé en ce que**,
la partie de toit de soufflet (10) en forme de U comporte des parties de tablier (42) dans la transition vers le reste du soufflet (5), qui peuvent être connectées avec les ondulations (6) ou les plis du reste du soufflet (5).

11. Procédé de restauration d'un soufflet usé dans la zone du toit, d'un dispositif d'intercommunication entre deux véhicules reliés entre l'un à l'autre de manière articulé, notamment avec un kit de réparation selon une ou plusieurs des revendications 1 à 10, comportant les étapes consistant à :
- séparer la partie de toit de soufflet usée du soufflet ;
- installer une nouvelle partie de toit de soufflet (10) ayant une forme correspondant à la partie de toit de soufflet retirée ;
- relier la nouvelle partie de toit de soufflet (10) au reste du soufflet (5) en
= reliant les cadres de toit de soufflet (38) aux cadres de soufflet (21) du reste du soufflet (5),
= reliant des parties de tablier (42) disposées au niveau de la partie de toit de soufflet (10) avec les plis ou ondulations (6) du reste du soufflet (5) ;
- relier les parties de cadre à visser (25) disposées sur la face avant de la partie de toit de soufflet (10) avec le véhicule respectif.
